# FASCICULE DE BREVET EUROPEEN

(11) **EP 1 792 555 B1**
(45) Date de publication et mention de la délivrance du brevet: **22.07.2009**
(21) Numéro de dépôt: 06291837.0
(22) Date de dépôt: 29.11.2006
(51) Int. Cl.: A47J 37/06

(54) **Appareil de cuisson**
Kochgerät
Cooking appliance

(30) Priorité: 30.11.2005 FR 0512181
(43) Date de publication de la demande: 06.06.2007
(73) Titulaire: SEB SA, 69130 Ecully (FR)
(72) Inventeur: Besson, Jean-Christophe, 74600 Seynod (FR); Dauvergne, François, 74600 Seynod (FR); Simond, Thierry, 73360 Saint Pierre de Genebroz (FR)
(74) Mandataire: Pichat, Thierry

(56) Documents cités:
- EP-A- 1 417 918
- FR-A- 2 491 317
- US-A- 5 036 180

## Description

La présente invention concerne un dispositif de cuisson du type adapté à être utilisé sur une table, par exemple un barbecue électrique de table ou d'intérieur.

On connaît un tel dispositif de cuisson du type comprenant une base dans laquelle est réalisée un ouverture dont le fond forme une cuve adapté à contenir de l'eau, une surface de cuisson adaptée à recevoir un aliment à cuire et supportée par la base au niveau de l'ouverture, un sous-ensemble chauffant comportant une résistance électrique de chauffe disposée sous la surface de cuisson, un réflecteur thermique ayant un élément de fond s'étendant sous la résistance électrique de chauffe.

Un tel dispositif est par exemple décrit dans la demande de brevet CH 684 383, présente l'inconvénient d'être difficilement nettoyable du fait de l'agencement des différents éléments constitutifs.

La présente invention vise à réaliser un appareil de cuisson de table pouvant être facilement nettoyé.

Selon l'invention, la cuve de l'appareil du type précité est distincte de la base, cette dernière comprenant une ouverture latérale réalisée dans une de ses parois latérales permettant le coulissement de la cuve dont l'extrémité supérieure des parois latérales sont sous l'élément du réflecteur quand elle est dans sa position d'utilisation.

D'autres particularités et avantages de la présente invention apparaîtront dans la description du mode de réalisation donné à titre d'exemple non limitatif et illustré par les dessins mis en annexe dans lesquels :
La figure 1 est une vue de dessus en perspective éclatée d'un appareil de cuisson conforme au mode de réalisation de la présente invention,
La figure 2 est une vue similaire à la figure 1, les éléments constitutifs de l'appareil n'étant pas séparés les uns des autres,
La figure 3 est une vue de dessus d'un appareil de cuisson des figures précédentes, la surface de cuisson ayant été changée,
La figure 4 est une vue en coupe du même appareil de cuisson selon la ligne IV-IV de la figure 3,
La figure 5 est une vue en coupe du même appareil de cuisson selon la ligne V-V de la figure 3, et

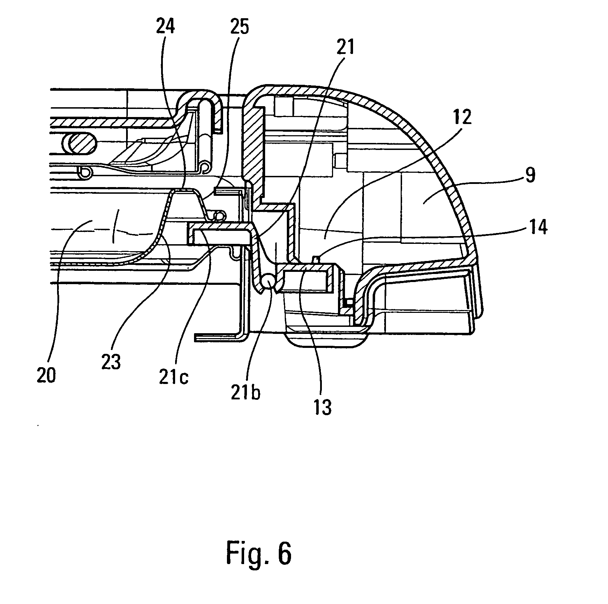

La figure 6 est une vue agrandie de la zone VI de la figure 4.

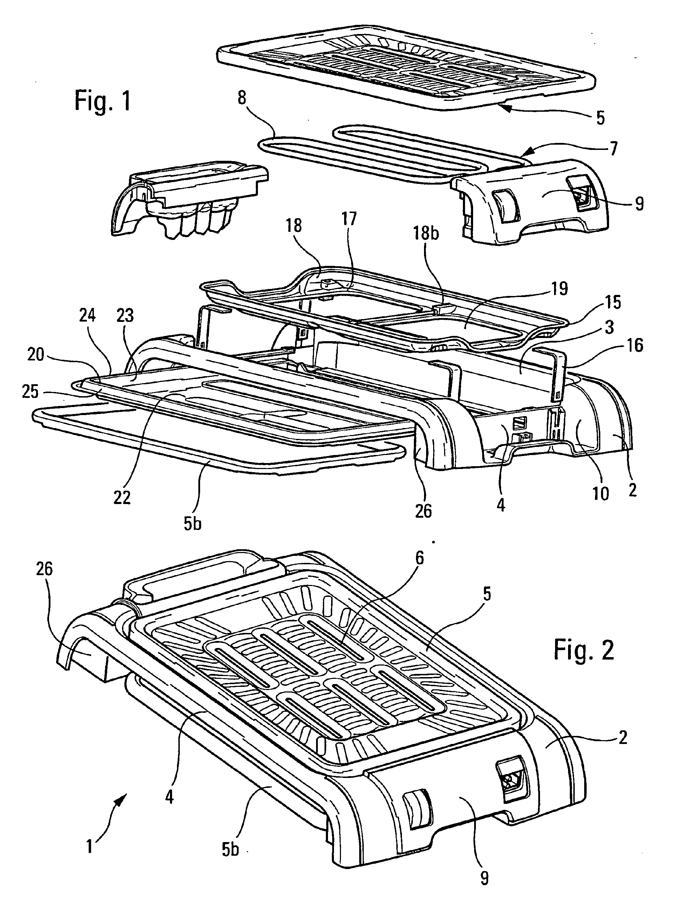

Comme on peut le voir aux figures 1 à 5, un dispositif de cuisson 1 (tel qu'un barbecue ou un grill de table) comprend une base 2 qui forme le corps principal de l'appareil 1 et dans laquelle est réalisée une ouverture 3. L'ouverture 3 est ainsi délimitée par des parois latérales 4 de la base 2. Dans le présent mode de réalisation, les parois latérales 4 (comme le reste de la base 2) sont réalisées en une matière thermoplastique.

Le dispositif de cuisson 1 comprend également une surface de cuisson 5 adapté à recevoir un aliment à cuire. La surface de cuisson 5 est supportée par la base 2 au niveau supérieur de l'ouverture 3. Dans le présent mode de réalisation, la surface de cuisson 5 est formée par une plaque de cuisson comportant des orifices d'écoulement 6 des jus de cuisson. Cette plaque de cuisson 5 est réalisée en aluminium embouti, ce qui permet d'obtenir une plaque de cuisson 5 dont l'épaisseur est moitié moins importante qu'une plaque de cuisson réalisée en fonte d'aluminium. Par ailleurs, la fabrication d'une telle plaque de cuisson est de faible coût.

Le dispositif de cuisson 1 comprend aussi un sous-ensemble chauffant 7 qui est adapté à transmettre la chaleur de cuisson à la surface de cuisson 5. Dans le présent mode de réalisation, le sous-ensemble chauffant 7, séparable de la base 2, comprend une résistance électrique de chauffe 8 et un boîtier de connexion 9 comprenant les différents organes de régulation électrique. Le sous-ensemble chauffant 7 est disposé dans la base 2 de sorte que la résistance électrique de chauffe 8 s'étende sous la surface de cuisson 5, entre les orifices d'écoulement 6. Le boîtier de connexion 9 est logé dans un logement 10 réalisé dans la base 2, à la périphérie de l'ouverture 3.

Par ailleurs, le dispositif de cuisson 1 comprend un dispositif de sécurité 11 qui est adapté à permettre l'alimentation électrique de la résistance électrique de chauffe 8 quand le sous-ensemble chauffant 7 est correctement placé sur la base 2, et plus précisément, quand le boîtier de connexion 9 est correctement disposé dans le logement 10. A cet effet, le boîtier de connexion 9 comprend un interrupteur de sécurité 12 difficile d'accès qui possède un état de mise hors tension dans lequel la résistance électrique de chauffe 8 ne peut être alimentée, et un état d'alimentation dans laquelle la résistance électrique de chauffe 8 peut être alimentée. Parallèlement, le logement 10 est délimité par une paroi de fond 13 qui porte un pion 14. Quand le boîtier de connexion 9 est correctement disposé dans le logement 10, le pion 14 est adapté à venir coopérer avec l'interrupteur de sécurité 12 de manière à l'entraîner de son état naturel de mise hors tension à son état d'alimentation.

Le dispositif de cuisson 1 comprend en outre un réflecteur thermique 15 qui est adapté à protéger les parois latérales 4 de la base 2 en matière plastique du rayonnement thermique émis par la résistance électrique de chauffe 8. Par ailleurs, afin de limiter le transfert de chaleur vers la base 2, le réflecteur thermique 15 est supportée par la base 2, par l'intermédiaire d'intercalaires 16 réalisés en une matière supportant la chaleur. Dans le présent mode de réalisation, le réflecteur thermique 15 comprend une paroi de fond 17 qui s'étend horizontalement sous la résistance électrique de chauffe 8 et des parois latérales 18 qui s'étendent verticalement le long des parois latérales 4 de la base 2 depuis la paroi de fond 17 jusqu'à la surface de cuisson 5 qui y repose. Dans le présent mode de réalisation, les parois latérales 18 du réflecteur thermique 15 ont deux fonctions : d'une part, du fait de leur continuité aussi bien verticale que circonférentielle, elles protègent les parois latérales 4 de la base 2, et, d'autre part, elles servent de seul support à la surface de cuisson 5 qui, de ce fait est sans contact avec la base (dans le présent mode de réalisation, la surface de cuisson 5 est distante de la base 2 d'au moins 5 mm).

Par ailleurs, du fait que la surface de cuisson 5 est en aluminium embouti, l'absence des rainures traditionnelles des plaques de cuisson en fonte d'aluminium servant de guide et de pont thermique avec la résistance électrique de chauffe 8 est compensée par la proximité de la résistance électrique de chauffe 8 avec la plaque de cuisson 5 et la paroi de fond 17 du réflecteur 15.

Dans le présent mode de réalisation, la paroi de fond 17 du réflecteur 15 comprend des bossages 18b adaptés à supporter la résistance électrique de chauffe 8. Le sous-ensemble chauffant 7, le réflecteur 15 et le logement 10 du boîtier 9 sont conformés de sorte que, quand le boîtier 9 est dans son logement 10, le réflecteur thermique 15 sur lequel la résistance électrique de chauffe 8 prend appui empêche le pivotement du sous-ensemble chauffant 7 sur lui-même et donc le soulèvement du boîtier 9 de la paroi de fond 13. Ainsi, en cas d'absence du réflecteur 15 amovible de la base 2, la masse de la résistance électrique de chauffe 8 entraîne le dégagement de l'interrupteur de sécurité 12 du pion 14 et donc la mise hors tension de la résistance électrique de chauffe 8.

La paroi de fond 17 du réflecteur 15 comprend des orifices de passage 19 qui permettent l'écoulement des jus de cuisson que le réflecteur 15 a récupéré du fait de la présence des orifices d'écoulement 6 de la surface de cuisson 5. Dans le présent mode de réalisation, quand la surface de cuisson 5 est correctement centrée par rapport au réflecteur 15 (par l'emploi des parois latérales 18 du réflecteur 15), les orifices de passage 19 de la paroi de fond 17 du réflecteur 15 sont disposés dans l'alignement des orifices d'écoulement 6 de la surface de cuisson 5, ce qui limite (voire élimine) la quantité de graisse de cuisson tombant sur la paroi de fond 17 et limite de la même façon les désagréments (résistance au nettoyage, fumées, odeur) liés à la combustion plus ou moins prononcée des graisses due à la température élevée du réflecteur 15. Dans le présent mode de réalisation, la paroi de fond 17 a une surface réfléchissante particulièrement limitée du fait qu'elle est formée par une seule pièce ayant la forme d'un cadre associé à une bande médiane. Ainsi, le réflecteur 15 est essentiellement formé des parois latérales 18 qui protègent le base 2 et supportent la surface de cuisson 5, le cadre et la bande médiane délimitant deux orifices de passage 19.

Comme on peut le voir aux différentes figures, et du fait qu'il est disposé au niveau des parois latérales 4 qu'il protège du rayonnement thermique, le réflecteur 15 qui est monté amovible peut être extrait de son emplacement depuis l'ouverture 3 (après avoir également extrait par cette même ouverture la surface de cuisson 5 et le sous-ensemble chauffant 7).

Par ailleurs, l'appareil de cuisson 1 comprend une cuve 20 qui est portée par la base 2 et qui s'étend sous le réflecteur 15. Cette cuve 20 est adaptée à contenir de l'eau quand l'appareil de cuisson 1 est en configuration d'utilisation et à recevoir les graisses de cuisson qui s'écoulent au travers des orifices d'écoulement 6 de la surface de cuisson 5 et des orifices de passage 19 du réflecteur 15. La cuve 20 qui est amovible de la base 2 sert d'intercalaire thermique entre la résistance électrique de chauffe 8 et le plan de travail sur lequel repose la base 2, du fait du rapport plus ou moins élevé entre la surface des orifices de passage 19 sur la surface totale de la paroi de fond 17 (surface réfléchissante plus surface des orifices de passage 19).

Dans le présent mode de réalisation, le dispositif de sécurité 11 est conformé de sorte que l'alimentation électrique de la résistance électrique de chauffe 8 est possible uniquement quand la cuve 20 est disposée sur la base 2. A cet effet, le dispositif de sécurité 11 comprend un levier 21 portant le pion 14 (ici, supportant la paroi de fond 13 portant le pion 14) et monté pivotant autour d'un axe de pivotement 21b sur la base 2 entre une position de fonctionnement dans laquelle le pion 14 est adapté à coopérer avec l'interrupteur de sécurité 12 et une position de mise hors tension dans laquelle le pion 14 ne peut venir en contact avec l'interrupteur 12. Le levier 21 est par nature sollicité dans sa position de mise hors tension et la cuve 20, quand elle est mise dans sa positon de fonctionnement, entraîne le levier 21 dans sa position de fonctionnement. En l'occurrence, la cuve 20 comprend une paroi de fond 22, des parois latérales 23 qui s'étendent vers le haut depuis la paroi de fond, un rebord périphérique 24 qui s'étend horizontalement vers l'extérieur depuis les parois latérales 23, et un bord tombant 25 qui s'étend vers le bas depuis les parois latérales 23 et qui est adapté à prendre appui sur une patte 21c portée par le levier 21 quand la cuve est dans sa position de fonctionnement.

Afin de permettre le déplacement rapide et direct de la cuve 20 par rapport à la base 2, la cuve 20 est montée coulissante horizontalement. A cet effet, la base 2 comprend une ouverture latérale 26 qui est réalisée dans une de ses parois latérales 4. En l'occurrence, l'ouverture latérale 26 est réalisée dans deux parois latérales 4 qui se font face de façon à permettre la manipulation de la cuve d'un côté comme de l'autre, et ces parois latérales 4 sont les parois les plus longues, c'est-à-dire celles perpendiculaires à la paroi latérale dans laquelle est réalisé le logement 10 du boîtier de connexion 9. Afin de permettre le coulissement, l'extrémité supérieure 24 des parois latérales 23 de la cuve 20 est disposée sous la paroi de fond 17 du réflecteur 15, quand la cuve 20 et le réflecteur 25 sont dans leur position d'utilisation respective. Ainsi, la cuve 20 peut être coulissée sans interférer avec le réflecteur 15 dont l'intégralité est situé à un niveau supérieur de l'extrémité supérieur de la cuve 20.

La partie des parois latérales 4 de la base 2 qui se trouve entre l'extrémité supérieure de l'ouverture latérale 26 et la paroi de fond 17 du réflecteur 15 est protégée du rayonnement thermique émis par la résistance électrique de chauffe 8 par la paroi de fond 17, et, en l'occurrence, par le cadre.

Dans le présent mode de réalisation, la position verticale d'utilisation de la cuve 20 est définie par des règles 27 fixées à la base 2 et sur lesquelles repose la paroi de fond 22 de la cuve 20. Ces règles 27 s'étendent parallèlement au plan des ouvertures latérales 26. Ces règles 27 permettent également de définir la position d'utilisation correcte de la cuve 20 au niveau de son aplomb par rapport à la base 2, la résistance électrique de chauffe 8, le réflecteur 15 et la surface de cuisson 5. A cet effet, la paroi de fond 22 de la cuve 20 comprend deux rainures qui sont adaptées à reposer sur les règles 27 en y épousant la forme générale et à immobiliser la cuve 20 dans sa position d'utilisation. De plus, afin le dispositif de sécurité 11 est conformé de sorte que l'alimentation électrique de la résistance électrique de chauffe 8 n'est possible que lorsque la cuve 20 est correctement disposée sur la base 2 (c'est-à-dire quand les rainures reposent sur les règles 27). A cet effet, la patte 21c du levier 21 est de faible largeur et elle est adaptée à être entraînée, non pas par l'ensemble du bord tombant 25 de la cuve 20, mais par une portion active plus longue que le reste du bord tombant 25 et qui ne se trouve face à la patte 21c que lorsque la cuve 20 est dans sa position d'utilisation.

Cet agencement particulier du réflecteur 15 (qui est principalement utilisé pour protéger la partie haute des parois latérales 4 de la base 2) et de la cuve 20 (qui est principalement utilisé pour protéger la partie basse des parois latérales 4 de la base 2 et le support sur lequel repose l'appareil 1) permet de réduire considérablement la hauteur de l'appareil 1. Il est ainsi possible d'avoir une cuve 20 dont la hauteur est comprise entre 18 et 22 mm (de préférence 20 mm), un réflecteur 15 dont la hauteur est comprise entre 20 et 24 mm (de préférence 23 mm), et une hauteur entre la paroi de fond 17 du réflecteur 15 et l'extrémité supérieure 24 de la cuve 20 comprise entre 6 et 8 mm (de préférence 7 mm) qui est protégée du rayonnement thermique par la paroi de fond 17 du réflecteur 15 formé par un cadre s'étendant horizontalement vers l'intérieur d'environ 5 mm des parois latérales 18, le réflecteur ayant une forme générale rectangulaire de 25 cm par 32 cm.

Par ailleurs, l'appareil de cuisson 1 comprend également un espace de rangement 28 qui est délimitée par la base 2, sous la cuve 20. Cet espace de rangement 28 est adapté pour recevoir une surface de cuisson. Comme en ce qui concerne la cuve 20, l'appareil de cuisson 1 est conformé de façon à permettre le déplacement rapide et direct de la surface de cuisson dans son espace de rangement 28. A cet effet, les ouvertures latérales 26 qui permettent le coulissement de la cuve 20 permettent également le coulissement de la surface de cuisson. La position rangée de la plaque de cuisson est définie verticalement par des épaulements 29 qui s'étendent perpendiculairement au plan des ouvertures latérales 26 sur lesquelles elle repose, et, dans le plan horizontal, par des échancrures portées par le bord tombant de la plaque de cuisson qui sont adaptées à coopérer avec des nervures réalisées dans les épaulements 29. Le système de positionnement dans le plan horizontal permet d'immobiliser et de stabiliser la plaque dans son espace de rangement.

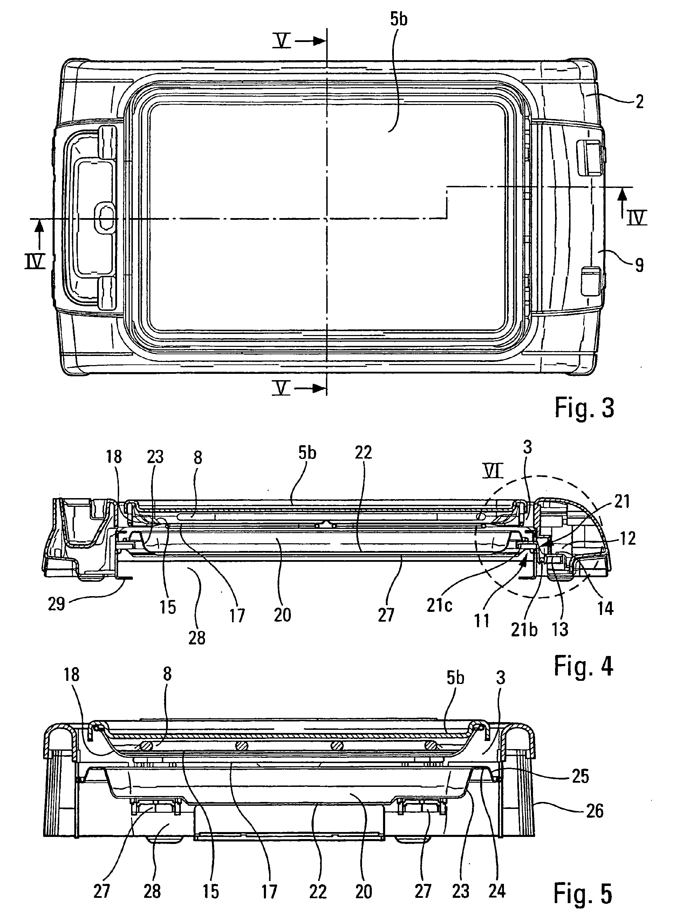

Le présent appareil de cuisson peut être employé pour plusieurs modes de cuisson, selon la surface de cuisson 5 livrée avec le reste de l'appareil 1 : cette surface de cuisson (en l'occurrence rectangulaire du fait de la forme de l'ouverture 3) peut être une plaque de type avec rainures et orifices d'écoulement (du type grille viande), une plaque pour crêpes, une plaque de cuisson lisse (du type plancha), une plaque ayant un rebord périphérique permettant la réception d'un couvercle (du type « skillet »), ou encore une pierre de cuisson (disposée alors dans le réflecteur). Dans le présent mode de réalisation, l'appareil de cuisson comprend une plaque de cuisson 5 munie d'orifices d'écoulement 6 (plaque portée par le réflecteur dans les figures 1 et 2) et une plaque de cuisson lisse 5b (plaque rangée dans la base dans les figures 1 et 2 et portée par le réflecteur dans les figures 3 à 5).

Il est également possible que le même appareil de cuisson 1 soit livré avec plus de deux surfaces de cuisson différentes.

Du fait de sa structure, l'appareil de cuisson 1 est très facilement nettoyable, même à grandes eaux une fois le sous-ensemble chauffant 7 séparé de la base 2 et du réflecteur 15).

Par ailleurs, de nombreuses modifications peuvent être apportées à l'appareil de cuisson. Ainsi, il serait possible d'avoir un appareil dont la paroi de fond du réflecteur soit formée par un cadre périphérique d'où s'étendent les parois latérales du réflecteur. Il serait aussi possible d'avoir un appareil dont la paroi de fond du réflecteur ait la forme générale d'un cadre, avec éventuellement des bandes de renfort, quelle que soit les caractéristiques des autres éléments constitutifs de l'appareil, notamment celles concernant l'agencement de la cuve dans la base.

## Revendications

1. Appareil de cuisson (1) comprenant une base (2) dans laquelle est réalisée un ouverture (3), une surface de cuisson (5) adaptée à recevoir un aliment à cuire et supportée par la base (2) au niveau supérieur de l'ouverture (3), un sous-ensemble chauffant (7) comportant une résistance électrique de chauffe (8) disposée sous la surface de cuisson (5), un réflecteur thermique (15) ayant une paroi de fond (17) s'étendant sous la résistance électrique de chauffe (8), et une cuve (20) adaptée à contenir de l'eau, disposée sous le réflecteur (15) quand elle est dans sa position d'utilisation, et adaptée à coulisser au travers d'une ouverture latérale (26) réalisée dans au moins une de parois latérales (4) de la base (2), **caractérisé en ce que** la cuve (20) est indépendante du réflecteur (15) et elle est intégralement située à un niveau inférieur au niveau inférieur du réflecteur (15) quand elle est dans sa position d'utilisation.

2. Appareil de cuisson (1) selon la revendication 1, **caractérisé en ce que** le réflecteur (15) comprend des parois latérales (18) qui s'étendent depuis la paroi de fond (17) et supportent la surface de cuisson (5).

3. Appareil de cuisson (1) selon la revendication 1 ou 2, **caractérisé en ce que** la surface de cuisson (5) est formée par une plaque de cuisson en aluminium embouti.

4. Appareil de cuisson (1) selon l'une des revendications 1 à 3, **caractérisé en ce que** la paroi de fond (17) du réflecteur (15) est adaptée à supporter la résistance de chauffe (8).

5. Appareil de cuisson (1) selon l'une des revendications 1 à 4, **caractérisé en ce que** le sous-ensemble chauffant (7) est amovible.

6. Appareil de cuisson (1) selon l'une des revendications 1 à 5, **caractérisé en ce qu'**il comprend un dispositif de sécurité (11) adapté à permettre l'alimentation électrique de la résistance électrique de chauffe (8) uniquement quand le sous-ensemble chauffant (7) et la cuve (20) sont correctement disposés sur la base (2).

7. Appareil de cuisson (1) selon la revendication 6, **caractérisé en ce que** le dispositif de sécurité (11) comprend un levier (21) qui est adapté à coopérer avec la cuve (20), qui porte un pion (14) adapté à coopérer avec un interrupteur de sécurité (12) monté dans un boîtier (9) du sous-ensemble chauffant (7), et qui est mobile entre une position de fonctionnement dans laquelle la cuve (20) est dans sa position d'utilisation et le pion (14) est dans une position permettant sa coopération avec l'interrupteur de sécurité (12), et une position de mise hors circuit dans laquelle la cuve (20) est hors de sa position d'utilisation et le pion (14) ne peut coopérer avec l'interrupteur de sécurité (12).

8. Appareil de cuisson (1) selon l'une des revendications 1 à 7, **caractérisé en ce que** la base (2) comprend, sous la cuve (20), un espace de rangement (28) adapté à recevoir une surface de cuisson (5).

9. Appareil de cuisson (1) selon la revendication 8, **caractérisé en ce que** chaque ouverture latérale (26) permettant le coulissement de la cuve (20) permet le coulissement de la surface de cuisson (5) par rapport à l'espace de rangement (28).

10. Appareil de cuisson (1) selon l'une des revendications 1 à 9, **caractérisé en ce que** la paroi de fond (17) du réflecteur (15) comprend des orifices de passage (19) qui sont disposés dans l'alignement d'orifices d'écoulement (6) réalisés dans la surface de cuisson (5).

11. Appareil de cuisson (1) selon la revendication 10, **caractérisé en ce que** la paroi de fond (17) du réflecteur (15) comprend essentiellement un cadre.

12. Appareil de cuisson (1) selon l'une des revendications 1 à 11, **caractérisé en ce que** la partie des parois latérales (4) de la base (2) se trouvant entre l'extrémité supérieure de l'ouverture latérale (26) et la paroi de fond (17) du réflecteur est protégée par cette paroi de fond (17).

## Claims

1. Cooking appliance (1) comprising a base (2) in which an opening (3) is produced, a cooking surface (5) adapted to receive a food to be cooked and supported by the base (2) at the top level of the opening (3), a heating subassembly (7) comprising an electric heating element (8) disposed under the cooking surface (5), a heat reflector (15) having a bottom wall (17) extending under the electric heating element (8), and a vessel (20) adapted to contain water, disposed under the reflector (15) when it is in its position of use and adapted to slide through a lateral opening (26) produced in at least one of the lateral walls (4) of the base (2), **characterised in that** the vessel (20) is independent of the reflector (15) and is entirely situated at a level lower than the bottom level of the reflector (15) when it is in its position of use.

2. Cooking appliance (1) according to claim 1, **characterised in that** the reflector (15) comprises lateral walls (18) that extend from the bottom wall (17) and support the cooking surface (5).

3. Cooking appliance (1) according to claim 1 or 2, **characterised in that** the cooking surface (5) is formed by a hotplate made from pressed aluminium.

4. Cooking appliance (1) according to one of claims 1 to 3, **characterised in that** the bottom wall (17) of the reflector (15) is adapted to support the heating element (8).

5. Cooking appliance (1) according to one of claims 1 to 4, **characterised in that** the heating subassembly (7) is removable.

6. Cooking appliance (1) according to one of claims 1 to 5, **characterised in that** it comprises a security device (11) adapted to allow an electrical supply to the electric heating element (8) only when the heating subassembly (7) and the vessel (20) are correctly disposed on the base (2).

7. Cooking appliance (1) according to claim 6, **characterised in that** the security device (11) comprises a lever (21) that is adapted to cooperate with the vessel (20), which carries a pin (14) adapted to cooperate with a safety switch (12) mounted in a housing (9) of the heating subassembly (7), and which is able to move between an operating position in which the vessel (20) is in its position of use and the pin (14) is in a position allowing cooperation thereof with the safety switch (12), and an off position in which the vessel (20) is out of its position of use and the pin (14) cannot cooperate with the safety switch (12).

8. Cooking appliance (1) according to one of claims 1 to 7, **characterised in that** the base (2) comprises, under the vessel (20), a storage space (28) adapted to receive a cooking surface (5).

9. Cooking appliance (1) according to claim 8, **characterised in that** each lateral opening (26) allowing sliding of the vessel (20) permits the sliding of the cooking surface (5) with respect to the storage space (28).

10. Cooking appliance (1) according to one of claims 1 to 9, **characterised in that** the bottom wall (17) of the reflector (15) comprises passage orifices (19) that are disposed in line with flow orifices (6) produced in the cooking surface (5).

11. Cooking appliance (1) according to claim 10, **characterised in that** the bottom wall (17) of the reflector (15) comprises essentially a frame.

12. Cooking appliance (1) according to one of claims 1 to 11, **characterised in that** the part of the lateral walls (4) of the base (2) situated between the top end of the lateral opening (26) and the bottom wall (17) of the reflector is protected by this bottom wall (17).

## Patentansprüche

1. Kochgerät (1) mit einer Basis (2), in welcher eine Öffnung (3) ausgebildet ist, einer Garfläche (5), die ein zu garendes Lebensmittel aufnehmen kann und von der Basis (2) auf einem Niveau über der Öffnung (3) abgestützt wird, einer Heizeinrichtung (7) mit einem elektrischen Heizwiderstand (8), der unter der Garfläche (5) angeordnet ist, einem Wärmereflektor (15) mit eine Bodenwand (17), die sich unter den elektrischen Heizwiderstand (8) ersteckt, und einer zum Aufnehmen von Wasser ausgebildeten Wanne (20), die unter dem Reflektor (15) angeordnet ist, wenn sie sich in ihrer Benutzungsposition befindet, und quer durch eine Seitenöffnung (26) verschoben werden kann, die in wenigstens einer der Seitenwände (4) der Basis (2) ausgebildet ist, **dadurch gekennzeichnet, dass** die Wanne (20) unabhängig von dem Reflektor (15) ist und diese ganz auf einem Niveau unter dem unteren Niveau des Reflektors (15) angeordnet ist, wenn sie sich in ihrer Benutzungsposition befindet.

2. Kochgerät (1) nach Anspruch 1, **dadurch gekennzeichnet, dass** der Reflektor (15) Seitenwände (18) umfasst, die sich von der Bodenwand (17) erstrecken und die Garfläche (5) stützen.

3. Kochgerät (1) nach Anspruch 1 oder 2, **dadurch gekennzeichnet, dass** die Garfläche (5) durch eine Garplatte aus gezogenem Aluminium gebildet wird.

4. Kochgerät (1) nach einem der Ansprüche 1 bis 3, **dadurch gekennzeichnet, dass** die Bodenwand (17) des Reflektors (15) so ausgebildet ist, dass diese den Heizwiderstand (8) stützen kann.

5. Kochgerät (1) nach einem der Ansprüche 1 bis 4, **dadurch gekennzeichnet, dass** die Heizeinrichtung (7) abnehmbar ist.

6. Kochgerät (1) nach einem der Ansprüche 1 bis 5, **dadurch gekennzeichnet, dass** dieses eine Sicherheitseinrichtung (11) umfasst, die so ausgebildet ist, dass sie eine elektrische Versorgung des elektrischen Heizwiderstandes (8) nur erlaubt, wenn die Heizeinrichtung (7) und die Wanne (20) auf der Basis (2) korrekt angeordnet sind.

7. Kochgerät (1) nach Anspruch 6, **dadurch gekennzeichnet, dass** die Sicherheitseinrichtung (11) einen Hebel (21) umfasst, der mit der Wanne (20) zusammenwirken kann, wobei dieser einen Stift (14) trägt, der so ausgebildet ist, dass dieser mit einem Sicherheitsschalter (12) zusammenwirkt, der in einem Gehäuse (9) der Heizeinrichtung (7) angebracht ist, und der zwischen einer Betriebsposition, in welcher sich die Wanne (20) in ihrer Nutzungsposition befindet und der Stift (14) sich in einer Position befindet, in welcher seine Zusammenwirkung mit dem Sicherheitsschalter (12) ermöglicht wird, und einer Ausschaltposition, in welcher sich die Wanne (20) außerhalb ihrer Benutzungsposition befindet und der Stift (14) nicht mit dem Sicherheitsschalter (12) zusammenwirken kann, beweglich ist.

8. Kochgerät (1) nach einem der Ansprüche 1 bis 7, **dadurch gekennzeichnet, dass** die Basis (2) unter der Wanne (20) einen Stauraum (28) umfasst, der eine Garfläche (5) aufnehmen kann.

9. Kochgerät (1) nach Anspruch 8, **dadurch gekennzeichnet, dass** jede Seitenöffnung (26), welche die Verschiebung der Seitenwanne (20) ermöglicht, die Verschiebung der Garfläche (5) in Bezug zum Stauraum (28) erlaubt.

10. Kochgerät (1) nach einem der Ansprüche 1 bis 9, **dadurch gekennzeichnet, dass** die Bodenwand (17) des Reflektors (15) Durchgangsöffnungen (19) umfasst, die in Ausrichtung mit Abschlussöffnungen (6) angeordnet sind, die in der Garfläche (5) ausgebildet sind.

11. Kochgerät (1) nach Anspruch 10, **dadurch gekennzeichnet, dass** die Bodenwand (17) des Reflektors (15) im Wesentlichen einen Rahmen umfasst.

12. Kochgerät (1) nach einem der Ansprüche 1 bis 11, **dadurch gekennzeichnet, dass** sich der Bereich der Seitenwände (4) der Basis (2), der sich zwischen dem oberen Ende der Seitenwand (26) und der Bodenwand (17) des Reflektors befindet, durch diese Bodenwand (17) geschützt ist.
